Europäisches Patentamt

(19) European Patent Office

Office européen des brevets

(11) Publication number: **0 130 167**
**B1**

(12) **EUROPEAN PATENT SPECIFICATION**

(45) Date of publication of patent specification: **14.01.87**

(21) Application number: **84850201.9**

(22) Date of filing: **25.06.84**

(51) Int. Cl.⁴: **F 16 L 59/14, F 16 L 59/00**

(54) **Method and device for insulating pipes.**

(30) Priority: **28.06.83 SE 8303687**

(43) Date of publication of application:
**02.01.85 Bulletin 85/01**

(45) Publication of the grant of the patent:
**14.01.87 Bulletin 87/03**

(84) Designated Contracting States:
**AT BE CH DE FR GB IT LI NL**

(56) References cited:
**DD-A- 108 143**
**DE-A-2 507 065**
**US-A-3 899 913**

(73) Proprietor: **LINDAB VENTILATION AB**
**Grevie**
**S-269 00 Bastad (SE)**

(72) Inventor: **Lennartsson, Lars Kenneth**
**Junkersgatan 14**
**S-260 93 Torekov (SE)**

(74) Representative: **Lenz, Franz et al**
**AWAPATENT AB Box 5117**
**S-200 71 Malmö (SE)**

Courier Press, Leamington Spa, England.

## Description

The present invention relates to a method for insulating pipes, in which method an inner pipe and a surrounding insulation are axially drawn or pressed into an outer pipe. The invention also comprises a device for such insulation work.

Ventilation pipes are usually insulated at the building site. This means that the pipes are first mounted in position by sheet-metal workers, whereupon insulation specialists cover the mounted pipes with some suitable insulation material. In most cases, this means heavy work in narrow spaces and at great heights. Furthermore, it is frequently necessary to protect the insulation against dampness and rain from outside by means of some type of outer casing. In view hereof, it would be a step in the right direction to supply the building site with previously insulated ventilation pipes comprising an inner pipe and an outer pipe and an intermediate insulation. However, the manufacture of such pipes has proved to be rather difficult because, in order to save costs, it should be possible to push together the inner and outer pipes with their intermediate insulation at one sweep, but this is difficult because the friction between the outer pipe and the insulation is greater than the friction between the inner pipe and the insulation, for which reason only the inner pipe can be moved after a part of it and of the insulation have been pushed into the outer tube. Besides, the space for the insulation between the pipes cannot be increased because the pipes may then easily slide apart during transport and, above all, during mounting.

DE—A—25 07 065 shows one method of overcoming the above mentioned problem but this method requires the operations of tying strips around the insulation material and, after introducing the inner pipe and the insulation into the outer pipe, cutting the tying strips with special cutting means.

It is the object of this invention to provide a simple and reliable method of making insulated pipes of the above-mentioned type, and also a device for carrying this method into effect. The characteristic features of the method and the device will appear from the appended claims.

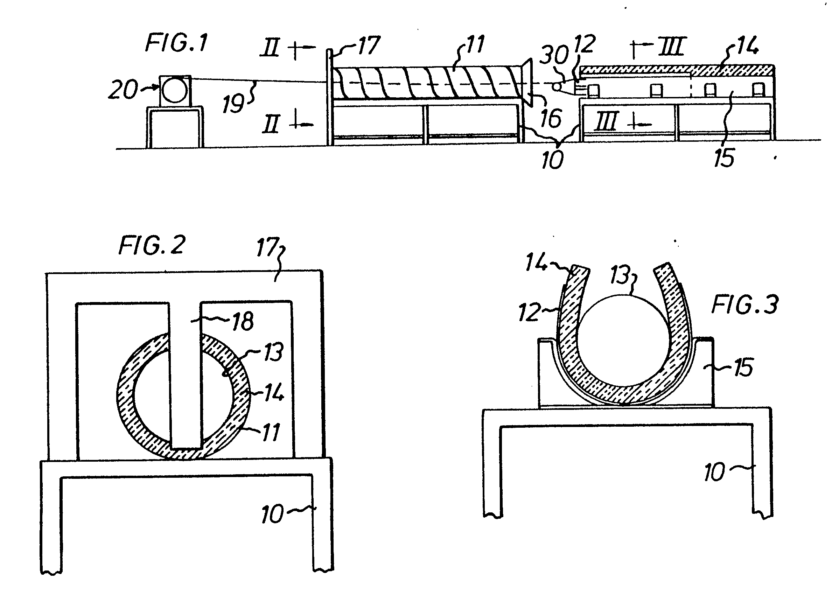

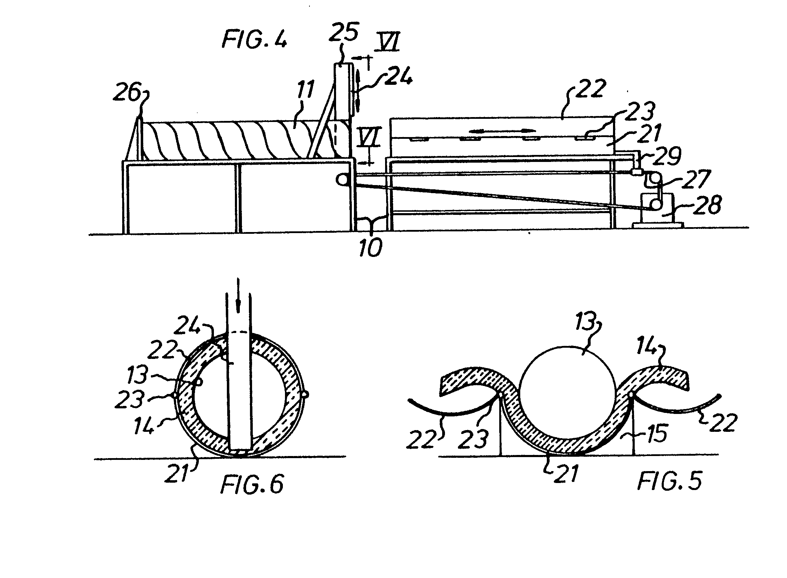

The invention will be described in greater detail below, reference being had to the accompanying drawings which illustrate schematically two embodiments of the invention. Fig. 1 is a lateral view of a pipe insulation plant according to a first embodiment. Fig. 2 is a view along line II—II in Fig. 1, while Fig. 3 is a section along line III—III in Fig. 1. Fig. 4 is a lateral view of another pipe insulation plant according to the invention. Fig. 5 is an end view of a shaping device utilised in the plant according to Fig. 4, and Fig. 6 is a view along line VI—VI in Fig. 4.

The pipe insulation plant according to the invention, shown in Fig. 1, comprises a frame 10 which is shown in two parts, but which may of course also be in one part only. Fixed to the frame 10 is an outer pipe 11 of sheet-metal, preferably a so-called spiro pipe. A shaping device 12 of flexible material, such as sheet-metal or plastics, is positioned coaxially opposite and at some distance from one end of the pipe 11. In this position, the shaping device 12 is open upwards, i.e. it has an approximately U-shaped cross-section. In the following description and in the claims, the terminology "approximately U-shaped cross-section" in connection with the shaping device and the insulation implies a section in which the free end portions of the U-flange may have different positions — from a position in which they are relatively close to one another to a position in which they are folded outwardly (Fig. 5). To maintain this cross-section, the shaping device 12 rests in a semicircular recess in a holder 15 mounted on the frame 10. The shaping device 12 is adapted to receive an insulation 14 which can be pressed down into the shaping device 12 to impart to it approximately the same shape as said shaping device, as will appear from Fig. 3. An inner pipe 13 is then placed in the insulation 14. According to Fig. 1, the holder 15 and the insulation have approximately the same length as the inner pipe 13, whereas the shaping device 12 need not be much longer than half the length of the pipe 13. The width of the insulation 14 corresponds approximately to the inner circumference of the outer pipe 11 so that the insulation, when placed around the inner pipe 13, is slightly compressed in the peripheral direction. The width of the shaping device 12 is slightly below the circumference of the pipe 13 so that an axial slit is formed when the ends of the shaping device are folded against the periphery of the pipe 13. A conical ring 16 is secured on the frame 10 opposite the end of the outer pipe 11, coaxially with the pipe. Opposite the other pipe end, the frame 10 has a yoke 17 surrounding the pipe 11 and provided with a stop arm 18 which is rigidly connected to the yoke 17 and extends diametrically across the end of the pipe 11 to form an abutment. As will appear from Fig. 2, the stop arm 18 ends a short distance above the upper side of the frame 10.

In making insulating pipes by means of the plant described with reference to Figs. 1—3, an outer pipe 11 is first fixed on the frame 10 between the socket 16 and the stop arm 18. The shaping device 12 is placed in the holder 15 and is given the U-shape illustrated, whereupon the insulation 14 and the inner pipe 13 are mounted in the shaping device. The shaping device 12 has at its forward end a coupling member 30 for connection with a traction rope 19 extending through the interior of the inner pipe 11 to a winch 20. On activation of the winch 20, the shaping device 12 is pulled by means of the traction rope 19 against the end of the outer pipe adjacent the conical ring 16. When the shaping device, which is U-shaped in cross-section, reaches the conical ring, the ring bends the flange ends of the shaping device towards one another, whereby the shaping device will obtain approximately circular cross-section, and the insulation 14 is pressed against the periphery of the inner pipe 13. By further pulling the rope 19, the shaping device 12, which is circular after passing through the conical ring, with the insulation 14 and the inner pipe 13, is drawn into the outer pipe 11. Drawing-in is continued until the forward ends of the insulation 14 and the inner pipe 13 reach the stop arm 18 which prevents further forward movement. Because of the axial slit in the shaping device, which is wider than the width of the stop arm 18, and because the stop arm ends at a distance from the upper surface of the frame 10 and above the inner periphery of the outer pipe, respectively, continued drawing of the shaping device 12 is not prevented, and the shaping device thus is readily extractable from the outer pipe 11, whereupon a completely insulated pipe can be removed from the frame 10.

The plant as shown in Figs. 4—6 operates on the same principle, but with construction details designed in a different manner. The shaping device is here made of more rigid material and comprises an approximately semicircular bottom part 21 provided on its longitudinal side edges with circularly curved wings 22 pivotally connected thereto by means of hinges 23. As in the earlier embodiment, the shaping device 21, 22 is adapted to be placed in a holder 15 having a semicircular recess, and the insulation 14 and the inner pipe 13 are placed in the part 21 of the shaping device in the manner shown in Fig. 5. The shaping device, prior to its insertion in the outer pipe 11, has been given an approximately circular shape, and the two curved portions 22 are simply folded against one another, whereby the insulation is placed against the periphery of the inner pipe 13, the wings 22 being so dimensioned that the edges facing one another in the folded-in position are at some distance from one another to form the axial slit. According to Fig. 4, the end of the outer pipe 11 facing away from the shaping device is placed against an end support 26 which may cover the entire end of the pipe. At the end of the pipe 11 facing the shaping device, a holder 25 is provided which has a stop arm 24 which, as is shown by arrows, is vertically movable between an upper position in which the end of the pipe 11 is exposed, and a lower position corresponding to the position of the stop arm 18 in Fig. 2. For moving the shaping device in the plant according to Fig. 4, the traction rope has been replaced by a device exerting pressure on the end of the shaping device facing away from the outer pipe. This device comprises a revolving belt 27 which operated by a drive unit 28 and with the upper part of which an engagement member 29 is connected.

For pipe insulation by means of the plant shown in Figs. 4—6, the insulation 14 and the inner pipe 13 are placed, in the manner shown in Fig. 5, in the shaping device 21, 22 mounted in the holder 15, whereupon the wings 22 are folded against one another. Then the drive unit 28 is activated, and the shaping device is pushed by means of the member 29 into the outer pipe 11, with the stop arm 24 in the upper position. When the shaping device 21, 22 with the insulation 14 and the inner pipe 13 has been moved into position in the outer pipe 11, the drive unit is stopped and the stop arm 24 is pushed down into the position shown in Fig. 6 in which it is opposite the axial slit between the wings 22 and has its upper end slightly above the inner surface of the outer pipe. Then the drive unit 28 is again activated, but for driving the revolving belt 27 in the opposite direction, whereby the member 29 extracts the shaping device 21, 22 from the outer pipe 11 and again places it in the holder 15. When the stop arm 24 has been pulled up into the upper position, the plant is ready to carry out another insulating operation.

It will appear from the above that the present invention makes it possible to insulate pipes in a simple manner and at a cost far below the cost of present-day pipe insulation work at the building site.

**Claims**

1. A method for insulating pipes, in which method an inner pipe (13) and a surrounding insulation (14) are axially drawn or pressed into an outer pipe (11), characterised in that the outer pipe (11) is fixed on a supporting member (10) coaxially opposite a shaping device (12; 21, 22) which in initial position has approximately U-shaped cross-section, that an insulating layer (14) of substantially the same length as the pipe (11, 13) and a width corresponding approximately to the inner circumference of the outer pipe (13) is placed in the shaping device (12; 21, 22) and has imparted to it substantially the U-shape of said shaping device, that the inner pipe (13) is placed in the insulation (14), that the shaping device (12; 21, 22) is made to assume approximately circular shape and caused to move into the outer pipe (11) into the intended position therein, and that the shaping device (12; 21, 22) is removed from the outer pipe (11), while retaining the inner pipe (11) and the insulation (14) therein.

2. A method as claimed in claim 1, characterised in that the shaping device (12) is pulled into the outer pipe (11) by means of a traction rope (19) extending through the outer pipe (11) to a winch (20), and that the shaping device is formed while being pulled into the outer pipe (11).

3. A method as claimed in claim 1, characterised in that the shaping device (21, 22) is formed by folding together parts (22) thereof and is placed in the outer pipe (11) by means of a device (27, 28, 29) adapted to press the shaping device (21, 22) into the outer pipe (11).

4. A device for positioning an inner pipe (13) and a surrounding insulation (14) in an outer pipe (11) of approximately the same length, characterised in that it comprises a frame (10) for accommodating the outer pipe (11) and, coaxially opposite said frame, an elongate shaping device (12; 21, 22) which in initial position has approximately U-shaped cross-section and in which an insulating layer (14) of essentially the same length as the pipes (11, 13) and a width corresponding approximately to the inner circumference of the outer pipe (11) can be placed and caused to assume the U-shape of the shaping device (12; 21, 22), that drive means (19; 27—29) are adapted to transport the shaping device (12; 21, 22) with the insulation (14) and the inner pipe (13) towards and into the outer pipe (11), that means are adapted, prior to or in connection with this transport, to form the shaping device (12; 21, 22) into approximately circular shape, and that a member (18; 24) is movable into engagement with the inner pipe and the insulation (14) after these have been mounted in position in the inner pipe (11) in order to hold said inner pipe and said insulation upon extraction of the shaping device (12; 21, 22) from the outer pipe (11) by said drive means (19; 27—29).

5. A device as claimed in claim 4, characterised in that the shaping device (12) consists of flexible material and can·be drawn into the outer pipe (11) by means of a rope (19) passed through said outer pipe and attachable to the forward end of the shaping device (12), a conical ring (16) being provided adjacent the end of the outer pipe through which the shaping device (12) is inserted, and concentric therewith, to impart an approximately circular shape to said shaping device (12).

6. A device as claimed in claim 5, characterised in that the frame (10) has an upwardly open semicircular channel (15) for accommodating the shaping device (12).

7. A device as claimed in claim 4, characterised in that the shaping device (21, 22) comprises a bottom part (21) which is semicircular in cross-section and has, along each longitudinal side edge thereof, a part (22) which is in the form of a circular arc and is pivotally connected to said bottom part, said shaping device being adapted to be pushed into the outer pipe by means of the drive means (27—29) engaging with the rear end of said shaping device.

8. A device as claimed in any one of claims 4—7, characterised in that the longitudinal edges of the shaping device (12: 21, 22) terminate at some distance from one another in the position in which said shaping device is approximately circular, to form an axial slit, and that said member (18, 24) for holding the inner pipe (13) and the insulation (4) in position upon extraction of the shaping device (12; 21, 22) from the outer pipe (11) consists of a stop arm which is mounted with one end on the frame, and extends diametrically over the end of the outer pipe and terminates at its free end at some distance from the inner periphery of said outer pipe (11), the dimension of said stop arm across the pipes (11, 12) being smaller than the width of said axial slit.

## Patentansprüche

1. Verfahren zum Isolieren von Rohren, bei welchem ein Innenrohr (13) und eine umgebende Isolierung (14) axial in ein Aussenrohr (11) einge-zogen oder eingepresst werden, dadurch gekennzeichnet, dass das Aussenrohr (11) auf einem Stützglied (10) koaxial gegenüber einer Formungseinrichtung (12; 21, 22) mit in der Ausgangsstellung etwa U-förmigem Querschnitt befestigt wird, dass eine Isolierschicht (14) von im wesentlichen derselben Länge wie das Rohr (11, 13) und einer dem Innenumfang des Aussenrohres (13) etwa entsprechenden Weite in der Formungseinrichtung (12; 21, 22) angebracht wird und im wesentlichen die U-Form der Formungseinrichtung erhält, dass das Innenrohr (13) in der Isolierung (14) angebracht wird, dass die Formungseinrichtung (12; 21, 22) etwa zur Form eines Kreises geformt und in das Aussenrohr (11) hinein in die beabsichtigte Lage darin bewegt wird, und dass die Formungseinrichtung (12; 21, 22) aus dem Aussenrohr (11) entfernt wird, das Innenrohr (11) und die Isolierung (14) jedoch darin belassen werden.

2. Verfahren nach Anspruch 1, dadurch gekennzeichnet, dass die Formungseinrichtung (12) in das Aussenrohr (11) mittels eines Zugseils (19) hineingezogen wird, das sich durch das Aussenrohr (11) zu einer Winde (20) erstreckt, und dass die Formungseinrichtung während ihres Einziehens in das Aussenrohr (11) geformt wird.

3. Verfahren nach Anspruch 1, dadurch gekennzeichnet, dass die Formungseinrichtung (21, 22) durch Zusammenklappen ihrer Teile (22) gebildet und im Aussenrohr (11) mittels einer Vorrichtung (27, 28, 29) angebracht wird, die dazu·vorgesehen ist, die Formungseinrichtung (21, 22) in das Aussenrohr (11) hineinzupressen.

4. Vorrichtung zum Anbringen eines Innenrohrs (13) und einer umgebenden Isolierung (14) in einem Aussenrohr (11) von etwa derselben Länge, dadurch gekennzeichnet, dass sie einen Rahmen (10) zur Aufnahme des Aussenrohrs (11) und koaxial dem Rahmen gegenüber eine langgestreckte Formungseinrichtung (12; 21, 22) umfasst, die in der Ausgangsstellung etwa U-förmigen Querschnitt aufweist und in der eine Isolierschicht (14) von hauptsächlich derselben Länge wie die Rohre (11, 13) und einer etwa dem Innenumfang des Aussenrohrs (11) entsprechenden Weite angebracht und zur U-Form der Formungseinrichtung (12; 21, 22) geformt werden kann, das Antriebsglieder (19; 27—29) vorgesehen sind, um die Formungseinrichtung (12; 21, 22) mit der Isolierung (14) und dem Innenrohr (13) gegen und in das Aussenrohr (11) hineinzutransportieren, dass Mittel vorgesehen sind, die vor oder während dieses Transports die Formungseinrichtung (12; 21, 22) etwa zur Form eines Kreises formen, und dass ein Glied (18; 24) mit dem Innenrohr und der Isolierung (14) in Eingriff geführt werden, nachdem das genannte Innenrohr und die genannte Isolierung auf ihren Platz im Innenrohr (11) gebracht worden sind, um das Innenrohr und die Isolierung beim Ausziehen der Formungseinrichtung (12; 21, 22) aus dem Aussenrohr (11) mittels der genannten Antriebsglieder (19; 27—29) festzuhalten.

5. Vorrichtung nach Anspruch 4, dadurch gekennzeichnet, dass die Formungseinrichtung (12) aus biegsamem Werkstoff besteht und in das Aussenrohr (11) mittels eines Seils (19) eingezogen werden kann, das durch das Aussenrohr hindurchgeführt und am vorderen Ende der Formungseinrichtung (12) befestigbar ist, wobei ein konischer Ring (16) an demjenigen Ende des Aussenrohrs, durch welches die Formungseinrichtung (12) eingeführt wird, konzentrisch damit angebracht ist, um der Formungseinrichtung (12) eine etwa kreisförmige Form zu verleihen.

6. Vorrichtung nach Anspruch 5, dadurch gekennzeichnet, dass der Rahmen (10) einen nach oben offenen, halbkreisförmigen Kanal (15) zur Aufnahme der Formungseinrichtung (12) besitzt.

7. Vorrichtung nach Anspruch 4, dadurch gekennzeichnet, dass die Formungseinrichtung (21, 22) einen im Querschnitt halbkreisförmigen Bodenteil (21) und längs jeder Längsseitenkante davon einen Teil (22) aufweist, der die Form eines Kreisbogens besitzt und schwenkbar mit dem Bodenteil verbunden ist, wobei die Formungseinrichtung in das Aussenrohr mittels der mit dem hinteren Ende der Formungseinrichtung eingreifenden Antriebsglieder (27—29) einführbar ist.

8. Vorrichtung nach einem der Ansprüche 4—7, dadurch gekennzeichnet, dass die Längskanten der Formungseinrichtung (12; 21, 22) in einigem Abstand voneinander in derjenigen Stellung enden, in der die Formungseinrichtung etwa kreisförmig ist, um einen axialen Schlitz zu bilden, und dass das genannte Glied (18, 24), mit dem das Innenrohr (13) und die Isolierung (4) beim Ausziehen der Formungseinrichtung aus dem Aussenrohr auf ihrem Platz gehalten werden, ein Sperrarm ist, der mit seinem einen Ende am Rahmen montiert ist und sich diametral über das Ende des Aussenrohres erstreckt und an seinem freien Ende in einigem Abstand vom Innenumfang des Aussenrohres (11) endet, wobei die Abmessung des Sperrarms über den Rohren (11, 12) kleiner ist als die Weite des genannten axialen Schlitzes.

**Revendications**

1. Procédé pour isoler des tubes, dans lequel on tire ou on pousse axialement dans un tube extérieur (11) un tube intérieur (13) et un isolant (14) qui l'entoure, caractérisé en ce que l'on fixe le tube extérieur (11) sur un élément support (10) coaxialement en face d'un dispositif de formage (12; 21, 22) qui présente en position initiale une section droite approximativement en forme de U; en ce que l'on place dans le dispositif de formage (12; 21, 22) une couche d'isolant (14) présentant sensiblement la même longueur que le tube (11, 13) et une largeur correspondant approximativement à la circonférence intérieure du tube extérieur (13) et qu'on lui donne sensiblement la forme en U dudit dispositif de formage; en ce que l'on place le tube intérieur (13) dans l'isolant (14); en ce que le dispositif de formage (12; 21, 22) est prévu pour prendre une forme approximativement circulaire et amené à se déplacer dans le tube extérieur (11) pour venir à la position qui y est prévue; et en ce que l'on sort le dispositif de formage (12; 21, 22) hors du tube extérieur (11) tout en y retenant le tube intérieur (11) et l'isolant (14).

2. Procédé comme revendiqué dans la revendication 1, caractérisé en ce que l'on tire le dispositif de formage (12) dans le tube extérieur (11) au moyen d'un câble de traction (19) qui s'étend dans le tube extérieur (11) jusqu'à un treuil (20); et en ce que le dispositif de formage prend sa forme pendant qu'on le tire dans le tube extérieur (11).

3. Procédé comme revendiqué dans la revendication 1, caractérisé en ce que l'on forme le dispositif de formage (21, 22) en repliant ensemble ses parties (22) et qu'on le place dans le tube extérieur (11) au moyen d'un dispositif (27, 28, 29) prévu pour pousser le dispositif de formage (21, 22) dans le tube extérieur (11).

4. Dispositif pour placer un tube intérieur (13) et un isolant (14) qui l'entoure dans un tube extérieur (11) approximativement de même longueur, caractérisé en ce qu'il comporte un bâti (10) pour reprendre le tube extérieur (11) et, opposé coaxialement audit bâti, un dispositif de formage, de forme allongée, (12; 21, 22) qui présente en position initiale une section droite approximativement en forme de U et dans lequel on peut placer une couche d'isolant (14), ayant sensiblement la même longueur que les tubes (11, 13) et une largeur correspondant approximativement à la circonférence intérieure du tube extérieur (11), et faire en sorte que cette couche prenne la forme en U du dispositif de formage (12; 21, 22); en ce que des moyens d'entrainement (19; 27—29) sont prévus pour transporter le dispositif de formage (12; 21, 22), y compris l'isolant (14) et le tube intérieur (13), en direction du tube extérieur (11) et dans ce tube; en ce que, avant ce transport ou en liaison avec ce transport, des moyens sont prévus pour donner au dispositif de formage (12; 21, 22) une forme approximativement circulaire; et en ce qu'après que l'on a placé le tube intérieur et l'isolant (14) en position dans le tube intérieur (11), un élément (18; 14) peut se déplacer pour venir en contact avec eux pour maintenir ledit tube intérieur et ledit isolant, lors de l'extraction du dispositif de formage (12; 21, 22), hors du tube extérieur (11) par lesdits moyens d'entrainement (19; 27—29).

5. Dispositif comme revendiqué dans la revendication 4, caractérisé en ce que le dispositif de formage (12) est fabriqué en matériau souple et peut être tiré dans le tube extérieur (11) au moyen d'un câble (19) qui passe dans ledit tube extérieur et que l'on peut attacher à l'extrémité avant du dispositif de formage (12), une couronne conique (16) étant prévue près de l'extrémité du tube extérieur par laquelle on a introduit le dispositif de formage (12) et concentriquement avec lui, pour donner audit dispositif de formage (12) une forme approximativement circulaire.

6. Dispositif comme revendiqué dans la revendication 5, caractérisé en ce que le bâti (10) présente un canal semi-circulaire ouvert vers le haut pour reprendre le dispositif de formage (12).

7. Dispositif comme revendiqué dans la revendication 4, caractérisé en ce que le dispositif de formage (21, 22) comporte une partie inférieure (21) de section droite semi-circulaire et présente, le long de chacun des bords latéraux longitudinaux de cette partie inférieure, une partie (22) qui a la forme d'un arc circulaire et qui est reliée, avec possibilité de pivotement, à ladite partie inférieure, ledit dispositif de formage étant prévu pour être poussé dans le tube extérieur par l'intermédiaire de moyens d'entrainement (27—29) qui viennent accrocher l'extrémité arrière dudit dispositif de formage.

8. Dispositif comme revendiqué dans l'une quelconque des revendications 4—7, caractérisé en ce que les bords longitudinaux du dispositif de formage (12; 21, 22) se terminent à une certaine distance l'un de l'autre dans la position dans laquelle ledit dispositif de formage est approximativement circulaire, de façon à former une fente axiale; et en ce que ledit élément (18, 24) de maintien du tube intérieur (13) et de l'isolant (4) en position lors de l'extraction du dispositif de formage (12; 21, 22) hors du tube extérieur (11) consiste en un bras d'arrêt qui est monté avec l'une de ses extrémités sur le bâti et qui s'étend diamétralement le long de l'extrémité du tube extérieur pour se terminer, à son extrémité libre à une certaine distance de la périphérie intérieure dudit tube extérieur (11), la dimension dudit bras d'arrêt en travers des tubes (11, 12) étant inférieure à la largeur de ladite fente axiale.

FIG.1

II

17  11  30 12  III  14

20  19  II  16  III  15

10

FIG.2  17

18

13

14

11

10

14  13  FIG.3

12

15

10

FIG. 4

FIG. 6

FIG. 5